# EUROPEAN PATENT APPLICATION

(11) **EP 4 164 098 A1**
(43) Date of publication of application: **12.04.2023**
(21) Application number: 22200167.9
(22) Date of filing: 07.10.2022
(51) Int. Cl.: H02K 21/22

(54) **STRUCTURE OF THREE-PHASE MOTOR**

(30) Priority: 08.10.2021 TW 110137564
(71) Applicant: NEW KAILUNG GEAR CO., LTD., Kaohsiung City 826 (TW)
(72) Inventor: LIU, Jen-Chih, Kaohsiung City 826 (TW); CHEN, Kuo-Feng, Kaohsiung City 811 (TW)
(74) Representative: Deambrogi, Edgardo

(57) **Abstract**

A structure of a three-phase motor is provided. The structure of the three-phase motor includes a stator, a rotor, first-phase windings, second-phase windings, and third-phase windings. In one embodiment, the stator has fifteen winding groove bodies, and the rotor has seven magnetic element pairs. In another embodiment, the stator has twenty-one winding groove bodies, and the rotor has ten magnetic element pairs. The first-phase windings are disposed in first winding groove bodies, and the first winding groove bodies are disposed adjacent to each other. The second-phase windings are disposed in second winding groove bodies, and the second winding groove bodies are disposed adjacent to each other. The third-phase windings are disposed in third winding groove bodies, and the third winding groove bodies are disposed adjacent to each other.

## Description

### BACKGROUND

### Technical field

The invention relates to a structure of a three-phase motor.

### Description of Related Art

With the rapid developments of technologies and economies, the technology of manufacturing electric motors is getting more and more advanced. The electric motors are electronic devices for transforming electrical energies into kinetic energies, in which a three-phase brushless DC motor is a common electric motor which may supply a higher torque to satisfy users' requirements. However, the three-phase brushless DC motor with a high torque needs powerful magnets and tight windings to acquire a large ratio of torque to weight, which may usually result in increasing of motor cogging and the difficulty for manufacturing the windings thereof.

### SUMMARY

For solving the problems described above, embodiments of the invention provide a structure of a three-phase motor which may reduce motor cogging as well as the difficulty of manufacturing the windings thereof.

According to an embodiment of the invention, the structure of the three-phase motor includes a stator, a rotor, first-phase windings, second-phase windings and third-phase windings. The stator has a plurality of winding groove bodies. The rotor is configured to rotate relative to the stator, in which the rotor has a plurality of magnetic element pairs each with two magnetic elements. The first-phase windings are disposed in first winding groove bodies of the winding groove bodies, in which the first winding groove bodies are adjacent to each other. The second-phase windings are disposed in second winding groove bodies of the winding groove bodies, in which the second winding groove bodies are adjacent to each other. The third-phase windings are disposed in third winding groove bodies of the winding groove bodies, in which the third winding groove bodies are adjacent to each other. The number of winding groove bodies and the number of magnetic element pairs are fifteen and seven, respectively, or the number of winding groove bodies and the number of magnetic element pairs are twenty-one and ten, respectively.

In some embodiments, the structure of the three-phase motor further includes a rotating shaft which is configured to combine the stator and the rotor.

In some embodiments, the stator includes a winding bobbin. The first-phase windings are formed by continuously winding a first-phase conductive wire around first branches of the winding bobbin; the second-phase windings are formed by continuously winding a second-phase conductive wire around second branches of the winding bobbin; and the third-phase windings are formed by continuously winding a third-phase conductive wire around third branches of the winding bobbin.

In some embodiments, one end of the first-phase conductive wire is configured to receive a first-phase current, and the other end of the first-phase conductive wire is a common end; one end of the second-phase conductive wire is configured to receive a second-phase current, and the other end of the second-phase conductive wire is a common end; one end of the third-phase conductive wire is configured to receive a third-phase current, and the other end of the third-phase conductive wire is a common end; the common end of the first-phase conductive wire, the common end of the second-phase conductive wire and the common end of the third-phase conductive wire are electrically connected.

In some embodiments, the magnetic elements of the magnetic element pairs are loadstones.

In some embodiments, the magnetic elements of the magnetic element pairs are distributed along a circumference of the rotor at equal angular intervals, and the winding groove bodies are distributed along a circumference of the stator at equal angular intervals.

In some embodiments, magnetic poles of adjacent ones of the magnetic elements are opposite.

In some embodiments, the magnetic elements of each magnetic element pair are located at opposite positions along a circumference of the stator, and magnetic poles of the magnetic elements of each magnetic element pair are opposite.

### BRIEF DESCRIPTION OF THE DRAWINGS

In order to make the aforementioned features and advantages of the invention been clear and more fully understood, the following specific examples are given and described in detail with the accompanying drawings as follows:
FIG. 1A illustrates a perspective structural diagram of a rotor of a three-phase motor according to some embodiments of the invention.
FIG. 1B illustrates a top-view schematic diagram of the rotor of the three-phase motor according to some embodiments of the invention.
FIG. 2A illustrates a perspective structural diagram of a stator of a three-phase motor according to some embodiments of the invention.
FIG. 2B illustrates a top-view schematic diagram of the stator of the three-phase motor according to some embodiments of the invention.
FIG. 3A, FIG. 3B and FIG. 3C illustrate schematic diagrams for manufacturing the three-phase windings according to some embodiments of the invention.
FIG. 4 illustrates an exploded perspective structural schematic diagram of the three-phase motor according to some embodiments of the invention.

### DETAILED DESCRIPTION

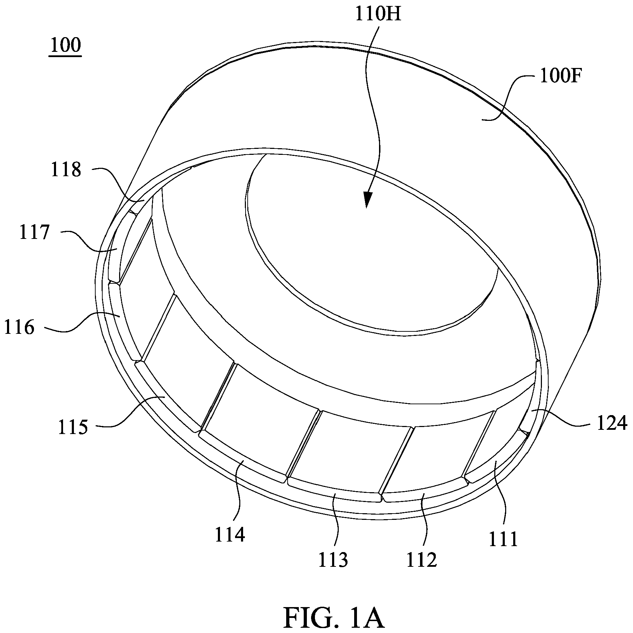

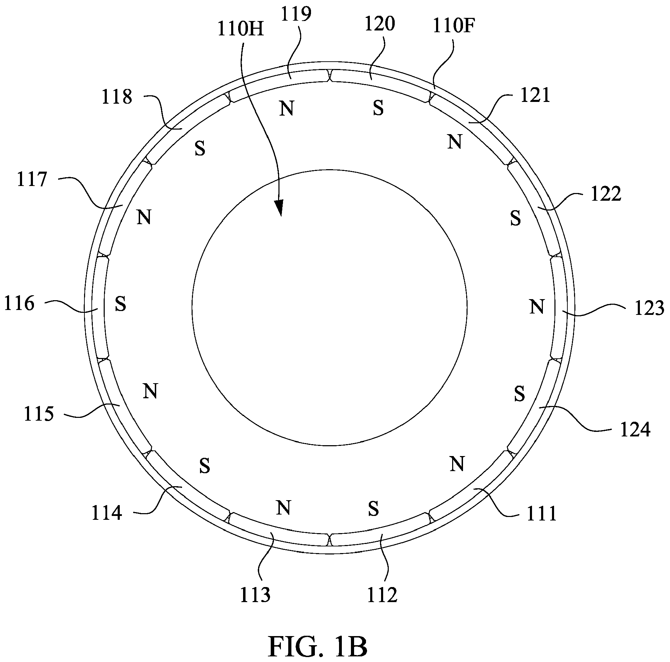

Referring to FIG. 1A and FIG. 1B, FIG. 1A illustrates a perspective structural diagram of a rotor 100 of a three-phase motor according to some embodiments of the invention, and FIG. 1B illustrates a top-view schematic diagram of the rotor 100 of the three-phase motor according to some embodiments of the invention. The rotor 100 includes a frame body 100F and fourteen magnetic elements 111-124. The frame body 100F includes a yoke core and has a through hole 110H which is provided for a rotating shaft (not illustrated) to pass therethrough. The magnetic elements 111-124 are disposed in the frame body 100F, and are distributed along a circumference of the rotor 100 at equal angular intervals. In the embodiment, the magnetic elements 111-124 are loadstones. However, the embodiments of the invention are not limited thereto. In another embodiment of the invention, the magnetic elements 111-124 may be, for example, magnets.

In the magnetic elements 111-124, the magnetic poles of adjacent ones of the magnetic elements are oppositely disposed. For example, the magnetic poles of the magnetic elements 111, 112 are oppositely disposed, in which the magnetic element 111 is disposed with a north pole (N pole) facing toward the interior of the frame body 100F, while the magnetic element 112 is disposed with a south pole (S pole) facing toward the interior of the frame body 100F. In another example, the magnetic poles of the magnetic elements 113, 114 are oppositely disposed, in which the magnetic element 113 is disposed with an N pole facing toward the interior of the frame body 100F, while the magnetic element 114 is disposed with an S pole facing toward the interior of the frame body 100F. In another example, the magnetic poles of the magnetic elements 115, 116 are oppositely disposed, in which the magnetic element 115 is disposed with an N pole facing toward the interior of the frame body 100F, while the magnetic element 116 is disposed with an S pole facing toward the interior of the frame body 100F. In another example, the magnetic poles of the magnetic elements 117, 118 are oppositely disposed, in which the magnetic element 117 is disposed with an N pole facing toward the interior of the frame body 100F, while the magnetic element 118 is disposed with an S pole facing toward the interior of the frame body 100F. In another example, the magnetic poles of the magnetic elements 119, 120 are oppositely disposed, in which the magnetic element 119 is disposed with an N pole facing toward the interior of the frame body 100F, while the magnetic element 120 is disposed with an S pole facing toward the interior of the frame body 100F. In another example, the magnetic poles of the magnetic elements 121, 122 are oppositely disposed, in which the magnetic element 121 is disposed with an N pole facing toward the interior of the frame body 100F, while the magnetic element 122 is disposed with an S pole facing toward the interior of the frame body 100F. In another example, the magnetic poles of the magnetic elements 123, 124 are oppositely disposed, in which the magnetic element 123 is disposed with an N pole facing toward the interior of the frame body 100F,while the magnetic element 124 is disposed with an S pole facing toward the interior of the frame body 100F.

In addition, the fourteen magnetic elements 111-124 according to the embodiment may form seven magnetic element pairs. For example, the magnetic elements 111, 118 are grouped into a magnetic element pair, in which the magnetic elements 111, 118 are located at opposite positions along the circumference of the rotor 100 with the magnetic poles thereof being oppositely disposed. In another example, the magnetic elements 112, 119 are grouped into a magnetic element pair, in which the magnetic elements 112, 119 are located at opposite positions along the circumference of the rotor 100 with the magnetic poles thereof being oppositely disposed. In another example, the magnetic elements 113, 120 are grouped into a magnetic element pair, in which the magnetic elements 113, 120 are located at opposite positions along the circumference of the rotor 100 with the magnetic poles thereof being oppositely disposed. In another example, the magnetic elements 114, 121 are grouped into a magnetic element pair, in which the magnetic elements 114, 121 are located at opposite positions along the circumference of the rotor100 with the magnetic poles thereof being oppositely disposed. In another example, the magnetic elements 115, 122 are grouped into a magnetic element pair, in which the magnetic elements 115, 122 are located at opposite positions along the circumference with the magnetic poles thereof being oppositely disposed. In another example, the magnetic elements 116, 123 are grouped into a magnetic element pair, in which the magnetic elements 116, 123 are located at opposite positions along the circumference with the magnetic poles thereof being oppositely disposed. In another example, the magnetic elements 117, 124 are grouped into a magnetic element pair, in which the magnetic elements 117, 124 are located at opposite positions along the circumference with the magnetic poles thereof being oppositely disposed.

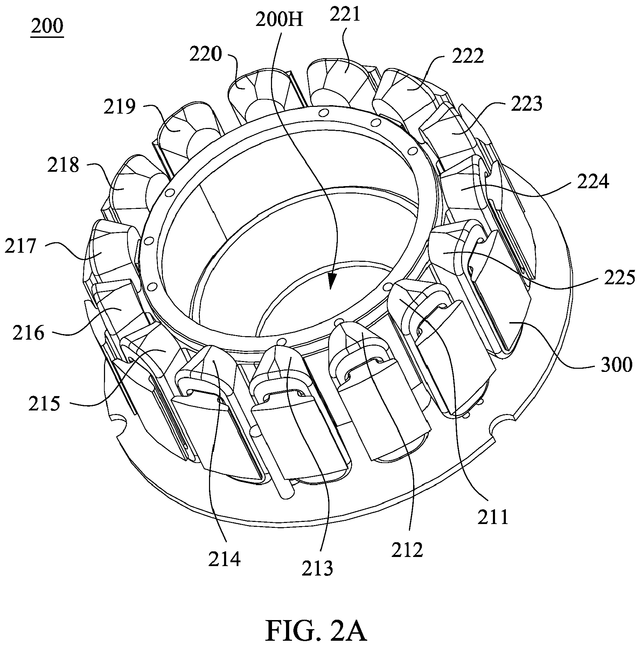

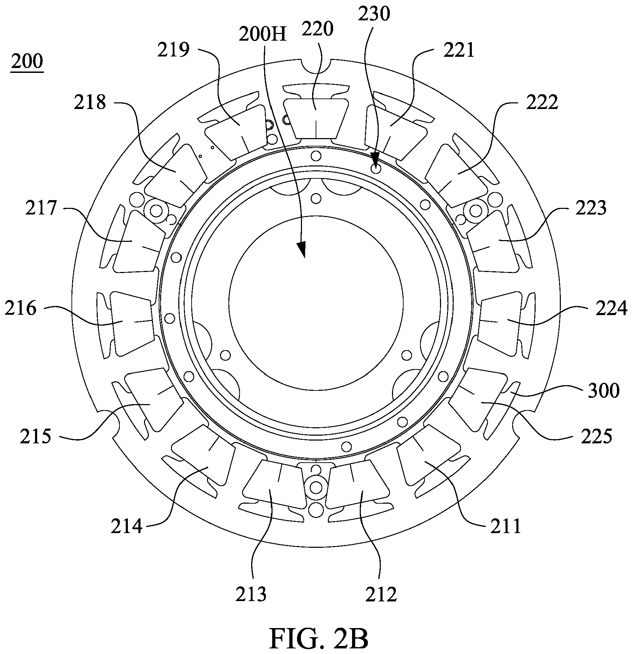

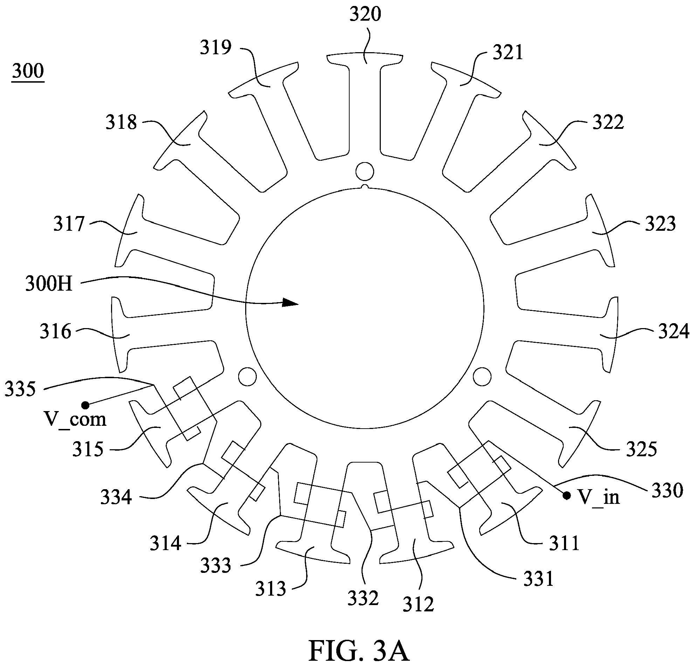

Referring to FIG. 2A and FIG. 2B, FIG. 2A illustrates a perspective structural diagram of a stator 200 of a three-phase motor according to some embodiments of the invention, and FIG. 2B illustrates a top-view schematic diagram of the stator 200 of the three-phase motor according to some embodiments of the invention. The stator 200 includes a through hole 200H, fifteen winding groove bodies 211-225, a winding bobbin 300, and windings winding around the winding bobbin 300 (as illustrated in FIG. 3A to FIG. 3C). The through hole 200H allows the aforementioned rotating shaft (not illustrated) to pass therethrough. The fifteen winding groove bodies 211-225 are distributed along a circumference of the stator 200 at equal angular intervals. In the embodiments of the invention, the number of magnetic poles of the rotor 100 of the three-phase motor (i.e., the number of magnetic elements) is equal to the number of winding groove bodies of the stator 200 minus one (i.e., 15-1=14). By designing the rotor 100 with fourteen magnetic elements and the stator 200 with fifteen winding groove bodies, the motor cogging can be significantly reduced. Moreover, such design is convenient for manufacturing the three-phase windings.

Reference is made to FIG. 3A to FIG. 3C which illustrate schematic diagrams for manufacturing the three-phase windings according to some embodiments of the invention, in which the winding bobbin 300 has a through hole 300H and fifteen branches 311-325. The through hole 300H allows the aforementioned rotating shaft (not illustrated) to pass therethrough. The fifteen branches 311-325 allows conductive wires to wind therearound to form windings, and are respectively disposed in the fifteen winding groove bodies 211-225 of the stator 200.

The manufacture of the windings corresponding to the first-phase (such as a V-phase) is shown in FIG. 3A. A first-phase conductive wire 330 continuously winds around the branches 311-315 of the winding bobbin 300 to form first-phase windings 331-335. In this embodiment, one end V_in of the first-phase conductive wire 330 is configured to receive a first-phase current, and the other end V_com of the first-phase conductive wire 330 is a common end.

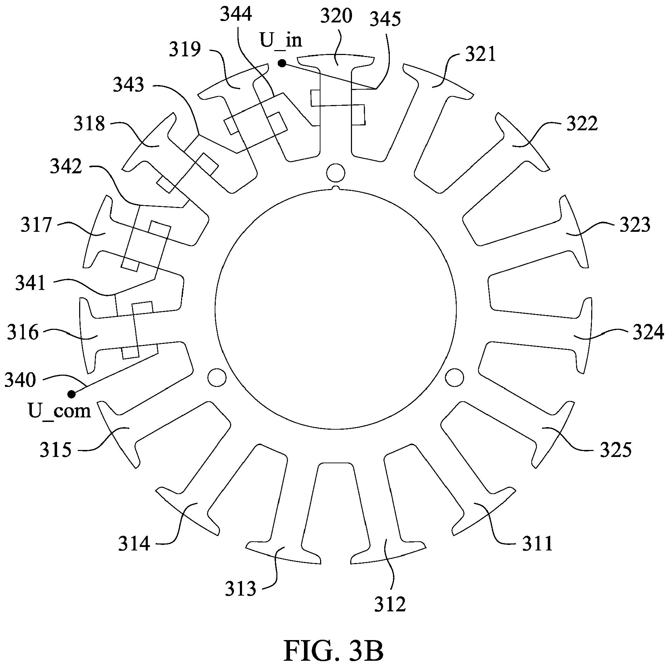

The manufacture of the windings corresponding to the second-phase (such as a U-phase) is shown as FIG. 3B. A second-phase conductive wire 340 continuously winds around the branches 316-320 of the winding bobbin 300 to form second-phase windings 341-345. In this embodiment, one end U_in of the second-phase conductive wire 340 is configured to receive a second-phase current, and the other end U_com of the second-phase conductive wire 340 is a common end which is electrically connected the common end V_com of the first-phase conductive wire 330.

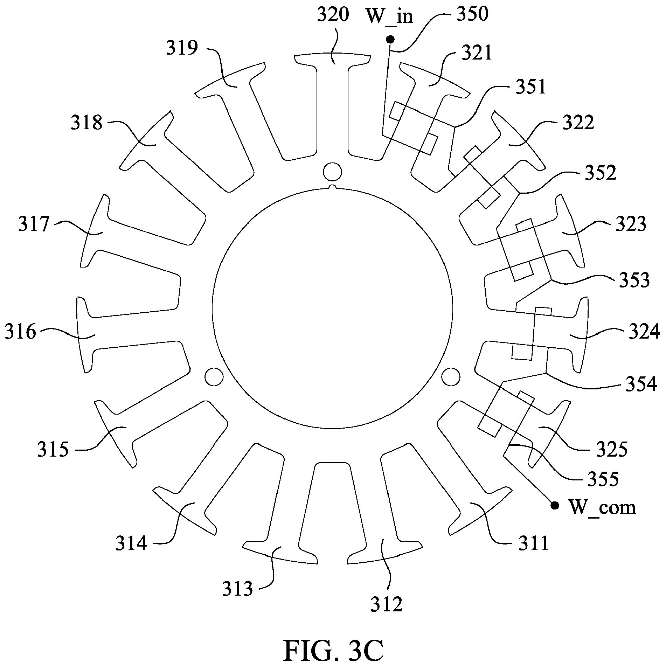

The manufacture of the windings corresponding to the third-phase (such as a W-phase) is shown as FIG. 3C. A third-phase conductive wire 350 continuously winds around the branches 321-325 of the winding bobbin 300 to form third-phase windings 351-355. In this embodiment, one end W_in of the third-phase conductive wire 350 is configured to receive a third-phase current, and the other end W_com of the third-phase conductive wire 350 is a common end which is electrically connected the common end V_com of the first-phase conductive wire 330 and the common end U_com of the second-phase conductive wire 340.

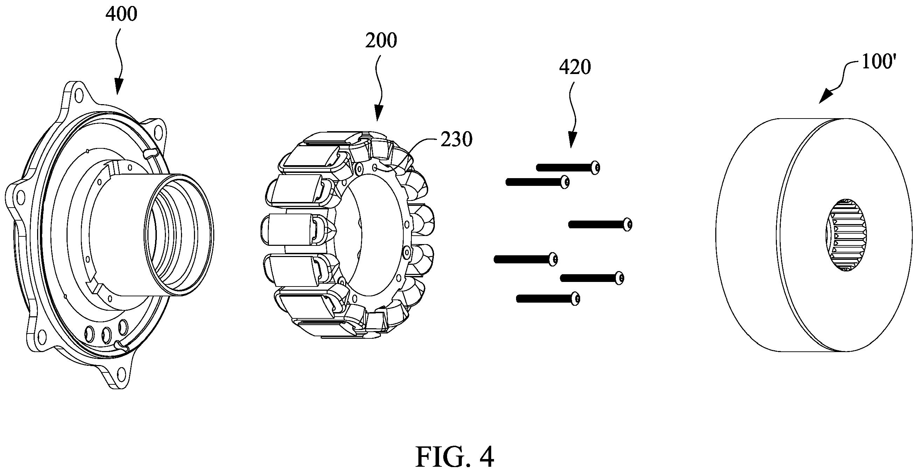

It can be understood from above description that, with the design in which the rotor 100 has fourteen magnetic elements and the stator 200 has fifteen winding groove bodies in the embodiments of the invention, the winding groove bodies (such as winding groove bodies 211-215) with the first-phase windings 331-335 are disposed adjacent to each other, the winding groove bodies (such as winding groove bodies 216-220) with the second-phase windings 341-345 are disposed adjacent to each other, and the winding groove bodies (such as winding groove bodies 221-225) with the third-phase windings 351-355 are disposed adjacent to each other. As such, a conductive wire with continuous winding can be configured to form the windings of each phase disposed in the winding groove bodies adjacent to each other, thereby decreasing the difficulty of manufacturing the windings. As shown in FIG. 4, in this embodiment, screws 420 may pass through the screw holes 230 of the stator 200 to fix the stator 200 on a base 400, and then a rotor module 100' covers the stator 200, in which the rotor module 100' includes a rotor housing and the aforementioned rotor 100.

Furthermore, the rotor 100 and the stator 200 according to the embodiments of the invention may be applied to an outer rotor or an inner rotor of a three-phase motor. Those ordinary skilled in the art may combine the rotor 100, the stator 200 and the winding bobbin 300 together to obtain a desired three-phase motor by passing the rotating shaft through the through hole 110H of the rotor 100, the through hole 200H of the stator 200 and the through hole 300H of the winding bobbin 300.

In some embodiments of the invention, the number of magnetic elements of the aforementioned rotor 100 may be changed to twenty (i.e., ten magnetic element pairs); the number of winding groove bodies of the aforementioned stator 200 may be changed to twenty-one; the number of the winding groove bodies of the aforementioned stator 200 may be changed to twenty-one; the number of the branches of the winding bobbin 300 may be changed to twenty-one. Such design may also reduce the motor cogging and form the windings in each phase by using a conductive wire with continuous winding disposed in the winding groove bodies adjacent to each other, thereby decreasing the difficulty of manufacturing the windings.

## Claims

1. A structure of a three-phase motor, **characterized by** comprising:
a stator (200) having a plurality of winding groove bodies (211-225);
a rotor (100) configured to rotate relative to the stator (200), wherein the rotor (100) has a plurality of magnetic element pairs each with two magnetic elements (111-124);
a plurality of first-phase windings (331-335) disposed in a plurality of first winding groove bodies (211-215) of the winding groove bodies (211-225), wherein the first winding groove bodies (211-215) are adjacent to each other;
a plurality of second-phase windings (341-345) disposed in a plurality of second winding groove bodies (216-220) of the winding groove bodies (211-225), wherein the second winding groove bodies (216-220) are adjacent to each other; and
a plurality of third-phase windings (351-355) disposed in a plurality of third winding groove bodies (221-225) of the winding groove bodies (211-225), wherein the third winding groove bodies (221-225) are adjacent to each other; and
wherein the number of winding groove bodies (211-225) and the number of magnetic element pairs are fifteen and seven, respectively, or wherein the number of winding groove bodies (211-225) and the number of magnetic element pairs are twenty-one and ten, respectively.

2. The structure of the three-phase motor of claim 1, **characterized by** further comprising:
a rotating shaft configured to combine the stator (200) and the rotor (100).

3. The structure of the three-phase motor of claim 1 or 2, **characterized in that**:
the stator (200) comprises a winding bobbin (300);
the first-phase windings (331-335) are formed by continuously winding a first-phase conductive wire (330) around a plurality of first branches (311-315) of the winding bobbin (300);
the second-phase windings (341-345) are formed by continuously winding a second-phase conductive wire (340) around a plurality of second branches (316-320) of the winding bobbin (300); and
the third-phase windings (351-355) are formed by continuously winding a third-phase conductive wire (350) around a plurality of third branches (321-325) of the winding bobbin (300).

4. The structure of the three-phase motor of claim 3, **characterized in that**:
one end (V_in) of the first-phase conductive wire (330) is configured to receive a first-phase current, and the other end (V_com) of the first-phase conductive wire (330) is a common end;
one end (U_in) of the second-phase conductive wire (340) is configured to receive a second-phase current, and the other end (U_com) of the second-phase conductive wire (340) is a common end;
one end (W_in) of the third-phase conductive wire (350) is configured to receive a third-phase current, and the other end (W_com) of the third-phase conductive wire (350) is a common end; and
the common end of the first-phase conductive wire (330), the common end of the second-phase conductive wire (340) and the common end of the third-phase conductive wire (350) are electrically connected.

5. The structure of the three-phase motor of any of claims 1 to 4, **characterized in that** the magnetic elements (111-124) of the magnetic element pairs are loadstones.

6. The structure of the three-phase motor of any of claims 1 to 5, **characterized in that** the magnetic elements (111-124) of the magnetic element pairs are distributed along a circumference of the rotor (100) at equal angular intervals, and the winding groove bodies (211-225) are distributed along a circumference of the stator (200) at equal angular intervals.

7. The structure of the three-phase motor of any of claims 1 to 6, **characterized in that** magnetic poles of adjacent ones of the magnetic elements (111-124) are opposite.

8. The structure of the three-phase motor of any of claims 1 to 7, **characterized in that** the magnetic elements (111-124) of each magnetic element pair are located at opposite positions along a circumference of the stator (200), and magnetic poles of the magnetic elements (111-124) of each magnetic element pair are opposite.
